# EUROPEAN PATENT APPLICATION

(11) **EP 4 340 437 A1**
(43) Date of publication of application: **20.03.2024**
(21) Application number: 21944612.7
(22) Date of filing: 11.06.2021
(51) Int. Cl.: H04W 24/08

(54) **MEASUREMENT INFORMATION COLLECTION METHOD, FIRST ACCESS NETWORK DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN)
(74) Representative: Novagraaf Technologies
(86) International application number: PCT/CN2021/099638
(87) International publication number: WO 2022/257103

(57) **Abstract**

The present application relates to a measurement information collection method, a first access network device, a terminal device, a chip, a computer-readable storage medium, a computer program product, and a computer program. The method comprises: according to a received first piece of identification information from among quality of experience (QoE) measurement collection configuration information, a first access network device determining a second piece of identification information; and the first access network device sending measurement configuration information to a terminal device, wherein the measurement configuration information comprises the second identification information, and the measurement configuration information is used for instructing the terminal device to acquire a QoE measurement report, and for sending the QoE measurement report and the second piece of identification information. By means of the embodiments of the present application, a first piece of identification information can be determined on the basis of a second piece of identification information, such that different QoE collection entities can be accurately distinguished.

## Description

### TECHNICAL FIELD

Embodiments of the present disclosure relate to the communication field, and more specifically, to a measurement information collection method, a first access network device, a terminal device, a chip, a computer-readable storage medium, a computer program product and a computer program.

### BACKGROUND

In the New Radio (NR) system, the Quality Of Experience (QoE) measurement collection (Quality Of Experience Measurement Collection, QMC) generally includes: an access network device receives a collection task initiated by a core network device, and sending relevant configuration file(s) to a terminal device, and receiving a QoE measurement report sent by the terminal device after the terminal device completes the collection of a measurement quantity. In related art, the access network device binds a service type of the collection task with an QoE collection entity in the core network, so as to send a QoE measurement report to a corresponding QoE collection entity based on the service type. However, in this method, when multiple QoE collection entities start collection tasks for collection of the same service type, the QoE measurement report(s) cannot be accurately sent to a QoE collection entity.

### SUMMARY

In view of the above, embodiments of the present disclosure provide a measurement information collection method, a first access network device, a terminal device, a chip, a computer-readable storage medium, a computer program product, and a computer program, which can be used to perform QoE measurement collection.

An embodiment of the present disclosure provides a measurement information collection method, including:
determining, by a first access network device, second identity information according to first identity information in received QoE measurement collection configuration information; and
sending, by the first access network device, measurement configuration information to a terminal device, wherein the measurement configuration information includes the second identity information, and the measurement configuration information is used to indicate the terminal device to obtain a QoE measurement report and send the QoE measurement report and the second identity information.

An embodiment of the present disclosure provides a measurement information collection method, including:
in a case where a terminal device receives measurement configuration information from a first access network device, obtaining, by the terminal device, a QoE measurement report, where the measurement configuration information includes second identity information, and the second identity information is determined by the first access network device according to the first identity information; and
sending, by the terminal device, the QoE measurement report and the second identity information.

An embodiment of the present disclosure further provides a first access network device, including:
a first processing module configured to determine second identity information according to first identity information in received QoE measurement collection configuration information;
a first communication module configured to send measurement configuration information to a terminal device, wherein the measurement configuration information includes the second identity information, and the measurement configuration information is used to indicate the terminal device to obtain a QoE measurement report and send the QoE measurement report and the second identity information.

An embodiment of the present disclosure further provides a terminal device, including:
a second processing module configured to, in a case where measurement configuration from a first network access device is received, obtain a QoE measurement report, wherein the measurement configuration information includes second identity information, and the second identity information is determined by the first access network device according to the first identity information; and
a second communication module configured to send the QoE measurement report and the second identity information.

An embodiment of the present disclosure also provides a first access network device, including a processor and a memory. The memory is used to store a computer program, and the processor calls and runs the computer program stored in the memory to implement the above measurement information collection method.

An embodiment of the present disclosure also provides a terminal device, including a processor and a memory. The memory is used to store a computer program, and the processor calls and runs the computer program stored in the memory to implement the above measurement information collection method.

An embodiment of the present disclosure further provides a chip, including a processor configured to call and run a computer program from a memory, to cause a device in which the chip is installed to implement the above measurement information collection methods.

An embodiment of the present disclosure further provides a computer-readable storage medium for storing a computer program, wherein the computer program causes a computer to execute the above measurement information collection methods.

An embodiment of the present disclosure further provides a computer program product, including computer program instructions, wherein the computer program instructions cause a computer to implement the above measurement information collection methods.

An embodiment of the present disclosure further provides a computer program, which enables a computer to implement the above measurement information collection method.

In the methods of the embodiments of the present disclosure, the core network device may carry the first identity information in the QoE measurement collection configuration information, so that the access network device can distinguish different QoE collection entities based on the first identity information. The access network device determines the second identity information according to the first identity information, and carries the second identity information in the measurement configuration information, so that the terminal device returns the QoE measurement report and the second identity information. In this way, the first identity information can be determined based on the second identity information, thereby accurately distinguishing different QoE collection entities. And, by converting the first identity information into the second identity information, in a case where the data length of the first identity information is too long, the overhead of the air interface can be reduced.

### BRIEF DESCRIPTION OF THE DRAWINGS

FIG. 1 is a communication system architecture according to an embodiment of the present disclosure.
FIG. 2 is a schematic diagram of QMC start and collection and measurement result report according to an embodiment of the present disclosure.
FIG. 3 is a schematic flowchart of a measurement information collection method according to an embodiment of the present disclosure.
FIG. 4 is a schematic flowchart of a measurement information collection method according to another embodiment of the present disclosure.
FIG. 5 is a flowchart of a specific application example according to embodiment of the present disclosure.
FIG. 6 is a schematic diagram showing processes of radio access network handover according to an embodiment of the present disclosure.
FIG. 7 is a schematic structural block diagram of a first access network device according to an embodiment of the present disclosure.
FIG. 8 is a schematic structural block diagram of a terminal device according to an embodiment of the present disclosure.
FIG. 9 is a schematic block diagram of a communication device according to an embodiment of the present disclosure.
FIG. 10 is a schematic block diagram of a chip according to an embodiment of the present disclosure.
FIG. 11 is a schematic block diagram of a communication system according to an embodiment of the present disclosure.

### DETAILED DESCRIPTION

The technical solutions in embodiments of the present disclosure will be described below with reference to the drawings in the embodiments of the present disclosure.

The technical solutions in embodiments of the present disclosure may be applied to various communication systems, such as, Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Networks (WLAN), Wireless Fidelity (WiFi), 5th-Generation (5G) system, or other communication systems.

Generally speaking, the number of connections supported by traditional communication systems is limited and easy to implement. However, with the development of communication technologies, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication etc., the embodiments of the present disclosure may also be applied to these communication systems.

Optionally, the communication systems in embodiments of the present disclosure may be applied to a Carrier Aggregation (CA) scenario, or may be applied to a Dual Connectivity (DC) scenario, or may be applied to a standalone (SA) network deployment scenario.

Embodiments of the present disclosure are described in combination with an access network device and a terminal device. The terminal device may also be called User Equipment (UE), access terminal, user unit, user station, mobile station, mobile terminal, remote station, remote terminal, mobile device, user terminal, terminal, wireless communication device, user agent or user device, etc.

The terminal device may be a station (ST) in a WLAN, a cellular phone, a cordless phone, a Session Initiation Protocol (SIP) phone, a Wireless Local Loop (WLL) station, or a Personal Digital Assistant (PDA) device, a handheld device with wireless communication capabilities, a computing device or other processing device connected to a wireless modem, a vehicle-mounted device, a wearable device, or a terminal device in a next-generation communication system, such as a terminal device in the NR network or a terminal device in a future evolved Public Land Mobile Network (PLMN) network.

In embodiments of the present disclosure, the terminal device may be deployed on land, including indoor or outdoor, handheld, wearable or vehicle-mounted; or, the terminal device may be deployed on water (such as on ships, etc.); or, the terminal device may be deployed in the air (such as on aircraft, balloons, and satellites, etc.).

In embodiments of the present disclosure, the terminal device may be a mobile phone, a tablet computer (Pad), a computer with wireless transceiver function, a virtual reality (VR) terminal device, an augmented reality (AR) terminal device, a wireless terminal device in industrial control, a wireless terminal device in self driving, a wireless terminal devices in remote medical, a wireless terminal device in smart grid, a wireless terminal device in transportation safety, a wireless terminal device in smart city, or a wireless terminal device in smart home, etc.

By way of example and not limitation, in embodiments of the present disclosure, the terminal device may also be a wearable device. The wearable device can also be referred to as a wearable smart device, which is a general term for applying wearable technology to intelligently design everyday wear and develop wearable devices, such as glasses, gloves, watches, clothing and shoes. A wearable device is a portable device that is worn directly on the body or integrated into users' clothes or accessories. The wearable device is not only a hardware device, but also realize powerful functions through software support, data interaction, and cloud interaction. Generalized wearable smart devices include full-featured and large-sized devices which can realize complete or partial functions that do not depend on smart phones, such as smart watches or smart glasses, and devices that only focus on a certain type of application functions, and need to cooperate with other devices like smart phones, such as smart bracelets for sign monitoring, or smart jewelry.

In embodiments of the present disclosure, the access network device may be a device for communicating with a mobile device. The access network device may be an Access Point (AP) in WLAN, a base station (BTS, Base Transceiver Station) in GSM or CDMA, or a base station (NB, NodeB) in WCDMA, an evolved base station in LTE (Evolutional Node B, eNB or eNodeB), or a relay station or an access point, or a vehicle-mounted device, a wearable device, or an access network device (gNB) in an NR network, or an access network device in future evolved PLMN network.

By way of example and not limitation, in embodiments of the present disclosure, the access network device may have mobile characteristics, for example, the access network device may be a mobile device. Optionally, the access network device may be a satellite, or a balloon station. For example, the satellite may be a Low Earth Orbit (LEO) satellite, a Medium Earth Orbit (MEO) satellite, a Geostationary Earth Orbit (GEO) satellite, or a High Elliptical Orbit (HEO) satellite, etc. Optionally, the access network device may also be a base station deployed on land, or water, etc.

In embodiments of the present disclosure, the access network device may provide services for a cell, and the terminal device communicates with the access network device through transmission resources (for example, frequency domain resources, or spectrum resources) used by the cell. The cell may be a cell corresponding to the access network device (for example, base station). The cell may belong to a macro base station or a base station corresponding to a small cell. The small cell here may include: a metro cell, a micro cell, a pico cell, a femto cell, etc. These small cells have the characteristics of small coverage and low transmit power, and are suitable for providing high-speed data transmission services.

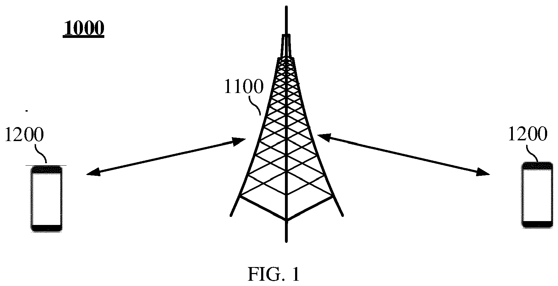

FIG. 1 schematically shows an access network device 1100 and two terminal devices 1200. Optionally, the wireless communication system 1000 may include multiple access network devices 1100, and the coverage area of each access network device 1100 may include other numbers of terminal devices, which is not limited in the embodiments of the present disclosure.

Optionally, the wireless communication system 1000 shown in FIG. 1 may further include a core network device, such as a Mobility Management Entity (MME), an Access and Mobility Management Function (AMF), User Plane Function (UPF) or other network entities, which are not limited in the embodiments of the present disclosure.

It should be understood that a device with a communication function in the network/system in the embodiments of the present disclosure may be referred to as a communication device. Taking the communication system shown in FIG. 1 as an example, the communication device may include the access network device and the terminal devices with communication functions, and the access network device and terminal devices may be the specific devices in the embodiments of the present disclosure, and repeated descriptions are not provided here. The communication device may also include core network device in the communication system, such as a network controller, a mobility management entity, or other core network entities, which are not limited in the embodiments of the present disclosure.

It should be understood that the methods in the embodiments of the present disclosure may be used to transmit various types of services, for example, enhanced Mobile Broad Band (eMBB). The eMBB aims at providing users with multimedia content, services and data, and its demand is growing rapidly. Another example is Ultra-Reliable Low Latency Communications (URLLC). The typical applications of URLLC include: industrial automation, electric power automation, telemedicine operation, traffic safety guarantee, etc. Another example is massive Machine Type Communication (mMTC). The typical characteristics of mMTC include: high connection density, small data volume, delay-insensitive services, low cost and long service life of modules, etc.

It should be understood that the terms "system" and "network" are often used interchangeably herein. In this specification, the term "and/or" is used to describe an association relationship of associated objects, for example, it means that there may be three kinds of relationships between the associated objects before and after the term. For example, A and/B may mean three cases: A alone, B alone, and A and B together. In this specification, the character "/" generally indicates that the contextual objects before and after the character are in an "or" relationship.

It should be understood that the "indicate/indication" mentioned in the embodiments of the present disclosure may be direct indicate/indication, or may be indirect indicate/indication, or may mean that there is an association relationship. For example, if A indicates B, it can mean that A directly indicates B, for example, B can be obtained through A; or, it can mean that A indirectly indicates B, for example, A indicates C, and B can be obtained through C; or, it can mean that there is an association relationship between A and B.

In the description of the embodiments of the present disclosure, the term "correspond/corresponding" may mean that there is a direct or indirect correspondence between two objects, or that there is an association relationship between the two, or that the two are in a relationship of indicating and being indicated, or a relationship of configuring and being configured, etc.

In order to facilitate the understanding of the technical solutions of the embodiments of the present disclosure, the related technologies of the embodiments of the present disclosure are described below. The following related technologies can be combined with the technical solutions of the embodiments of the present disclosure as optional solutions, and they all belong to protection scope of the embodiments of the present disclosure.

### (1) QMC start and collection and measurement result report

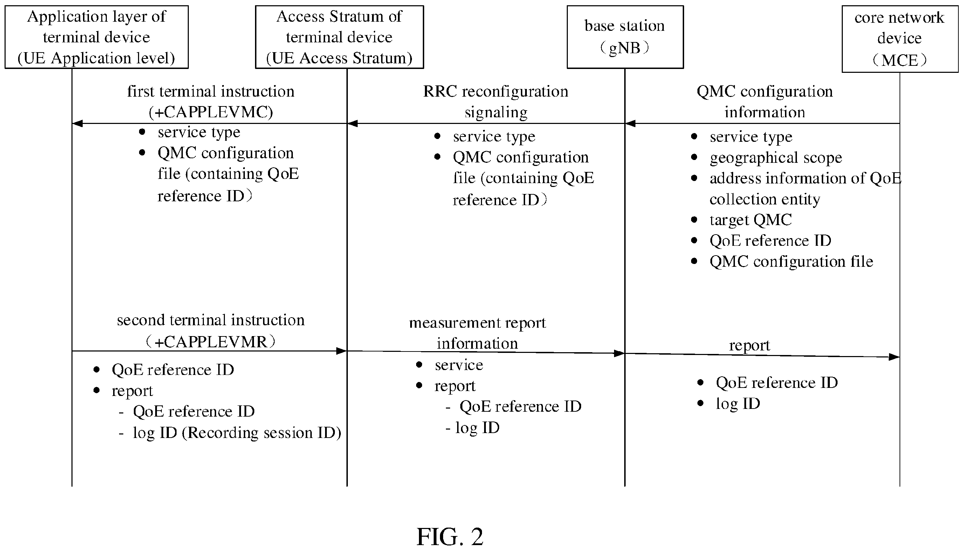

As shown in FIG. 2, the procedure of QMC start and collection and reporting of measurement result includes the following steps:
In step 1, a core network device such as a Measurement Collection Entity (MCE) sends QMC configuration information such as activationAreaQMCjob signaling to a base station such as eNB or gNB. The QMC configuration information includes a service type (ServiceType), a geographical scope (AreaScope), an IP address of QoE collection entity (QoE CE), a target Public Land Mobile Network (PLMN), a target QMC, a QoE reference identity (QoE Reference Identifier, QoE Reference ID) and a QMC configuration file (QMC config.file).
In step 2, the base station sends the service type (ServiceType) and the QMC configuration file to a terminal device through Radio Resource Control (RRC) reconfiguration signaling (RRCReconfiguration signaling). The QMC configuration file contains a QoE reference identity (QoE Reference ID). Here, the base station binds the ServiceType to the IP address of the QoE collection entity.

Specifically, for the setting of RRCReconfiguration, reference may be made to the following description:

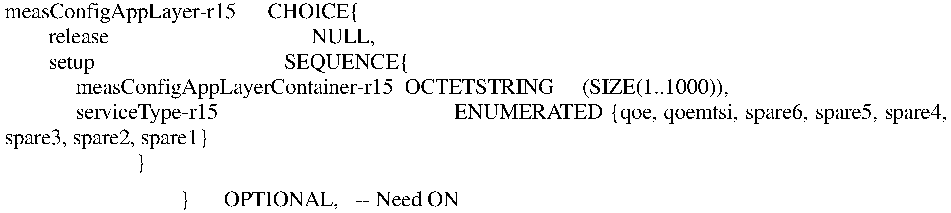

In step 3, the Access Stratum (AS) of the terminal device (UE) sends the service type and QMC configuration file to the UE application layer (Application level) through a first terminal instruction such as + CAPPLEVMC.

In step 4, after the UE application layer completes the measurement quantity collection, a corresponding report (the report contains the QoE reference ID) is sent to the UE AS layer through a second terminal instruction such as + CAPPLEVMR.

In step 5, the UE AS layer then determines the service type according to the type of the application (App) that submits the report, and sends the service type and QoE report to the base station through measurement report information such as measuremenntreportApplyer.

Specifically, for the setting of measuremenntreportApplyer, reference can be made to the following description:

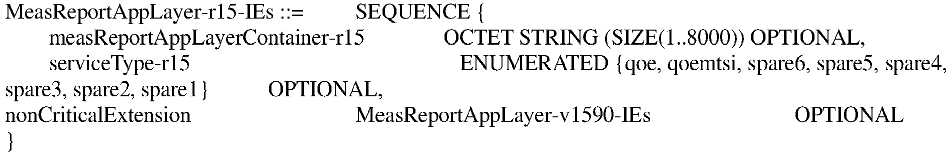

In step 6, the base station sends the received measurement report measurement report to a corresponding MCE. Specifically, the base station can find the corresponding MCE through the service type.

### (2) QoE collection

The purpose of QoE collection and reporting is that, for a specific application, a network configures a terminal to report measurement information related to user experience of the application, such as reporting measurement information for the following measurement quantities:
Average Throughput;
Initial Playout Delay;
Buffer Level;
Device information.

A manner for the network to determine terminal(s) that meets(meet) the QoE collection conditions is as follows. The base station searches for suitable terminal(s) within an appropriate geographical range (areaScope) according to Evolved Universal Terrestrial Radio Access (EUTRA) capability that supports QoE, and sends the QMC to them.

After in-depth researches by the inventors of the present disclosure, it is found that in the above technical solution, the base station binds a service type with an IP address of a QoE collection entity, and this does not support distinguishing the IP addresses of different QoE collection entities in a case where multiple network slices simultaneously perform different QoE collections for the same service type. In related art, it is proposed to perform mapping of an IP address of a QoE collection entity through QoE reference identity (QoE reference ID). However, the data length of the QoE reference identity is very large.

Specifically, a QoE reference parameter (QoE reference ID) is used to specify a network request session. The QoE reference parameter must be globally unique, so it is composed as follows:
MCC+MNC+QMC ID; where MCC (Mobile Country Code) and MNC (Mobile Network Code) come with the tracking activation request of the management system to identify a PLMN that includes the management system; QMC ID is a 3-byte bit stream. The QMC ID is generated by the management system or the operator, and is used to identify a traffic node and the QoE measurement collection task of a measurement collection center.

If the QoE reference ID needs to be sent along with the measurement report every time the report is sent over the air interface (for example, when the report is sent from the UE AS to the gNB), the transmission overhead of the air interface is very large.

The solutions provided in the embodiments of the present disclosure are mainly used to solve at least one of the above problems.

In order to understand the characteristics and technical contents of the embodiments of the present disclosure in more detail, the implementations of the embodiments of the present disclosure will be described in detail below in conjunction with the accompanying drawings. The attached drawings are only for illustration and description, and are not intended to limit the embodiments of the present disclosure.

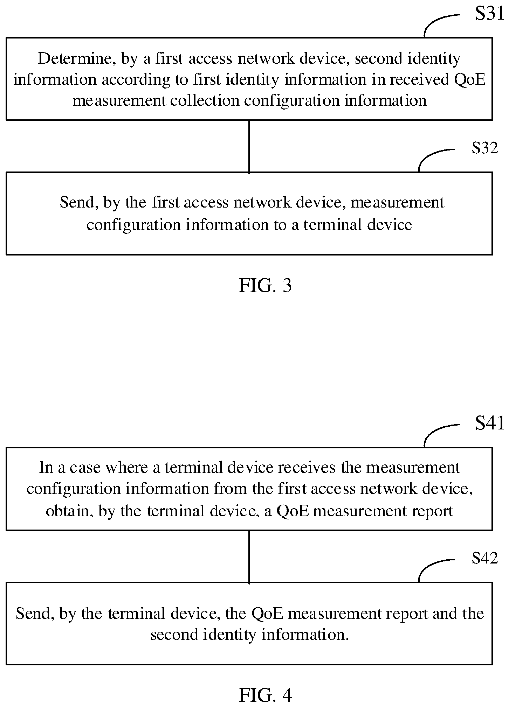

FIG. 3 is a schematic flowchart of a measurement information collection according to an embodiment of the present disclosure. The method can optionally be applied to the system shown in FIG. 1, but is not limited thereto. The method includes:
In step S31, a first access network device determines second identity information according to first identity information in received QoE measurement collection configuration information.
In step S32, the first access network device sends measurement configuration information to a terminal device. The measurement configuration information includes the second identity information. The measurement configuration information is used to indicate the terminal device to obtain a QoE measurement report and send the QoE measurement report and the second Identity information.

Exemplarily, the QoE measurement collection configuration information, that is, the QMC configuration information, may come from a core network device, such as one of multiple network slices of the core network. The QMC configuration information may be activationAreaQMCjob signaling, which includes at least one of the following information: a service type (ServiceType), a geographic scope (AreaScope), an IP address of a QoE collection entity (QoE CE), a target Public Land Mobile Network (PLMN), a target QMC, a QoE reference ID and a QMC configuration file (QMC config.file).

Exemplarily, the first identity information may be a QoE reference identity, which may contain at least one of: MMC, MNC and QMC ID. The first identity information may be used to determine a core network device (that is, the QoE collection entity) that sends the QMC configuration information. For example, the first identity information has a binding relationship with the IP address of the QoE collection entity. Since the second identity information is determined according to the first identity information, the first identity information may also be determined based on the second identity information, and accordingly the QoE collection entity may be determined.

After determining the second identity information, the first access network device sends measurement configuration information to the terminal device, where the measurement configuration information is, for example, RRC connection reconfiguration (RRCConnectionReconfiguration) signaling.

Optionally, the measurement configuration information may include second identity information, a service type and a QMC configuration file.

The service type is used to enable the AS layer of the terminal device receiving the measurement configuration information to determine a terminal device application (App) for which the QoE measurement is performed. The QMC configuration information is used to perform a specific QMC task.

Corresponding to the above method, the terminal device may receive the measurement configuration information, and carry out the QMC task based on the measurement configuration information. Specifically, as shown in FIG. 4, an embodiment of the present disclosure also provides a measurement information collection method. The method includes the following steps.

In step S41, when a terminal device receives the measurement configuration information from the first access network device, the terminal device obtains a QoE measurement report. The measurement configuration information includes second identity information, and the second identity information is determined by the first access network according to the first identity information.

In step S42, the terminal device sends the QoE measurement report and the second identity information.

The first identity information is carried by the QMC configuration information received by the first access network device.

Exemplarily, the access stratum of the terminal device receives the measurement configuration information, and determines a specific application based on the service type in the measurement configuration information, and sends the QMC configuration file in the measurement configuration information to the application through a terminal instruction. The application, based on the QMC configures file, performs QoE measurement, obtains a QoE measurement report, and sends the QoE measurement report to the access stratum of the terminal device through a terminal instruction.

Optionally, in step S42, the terminal device sending the QoE measurement report and the second identity information may include:
sending, by the terminal device, the QoE measurement report and the second identity information to the first access network device.

Exemplarily, the access stratum of the terminal device sends the QoE measurement report and the second identity information to the first access network device.

Since the terminal device transmits the second identity information in plaintext to the first access network device, the first access network device may determine the first identity information based on the second identity information, and then determine the QoE collection entity. Specifically, the measurement information collection method may further include:
in a case where the QoE measurement report and the second identity information are received, determining, by the first access network device, the first identity information according to the second identity information; and
determining, by the first access network device, address information of the core network device corresponding to the QoE measurement collection configuration information according to the first identity information, and sending the QoE measurement report to the core network device based on the address information.

As can be seen from above, according to the methods of the embodiments of the present disclosure, the core network device can carry the first identity information in the QoE measurement collection configuration information, so that the access network device can distinguish different QoE collection entities based on the first identity information. The access network device determines the second identity information according to the first identity information, and carries the second identity information in the measurement configuration information, so that the terminal device returns the QoE measurement report and the second identity information. In this way, the first identity information can be determined based on the second identity information, thereby accurately distinguishing different QoE collection entities.

Optionally, a data length of the second identity information is smaller than a data length of the first identity information. Since the data length of the second identity information is smaller than the data length of the first identity information, air interface overhead can be reduced.

Optionally, in the above step S31, determining, by the first access network device, the second identity information according to the first identity information in the received QoE measurement collection configuration information may include: according to mapping information, mapping, by the first access network device, the first identity information in the QoE measurement collection configuration information to the second identity information.

Optionally, the mapping information may be a preset mapping table, a mapping rule, a mapping formula, and the like.

Correspondingly, the first access network device determining the first identity information according to the second identity information may include: mapping, by the first access network device, the second identity information to the first identity information according to the mapping information.

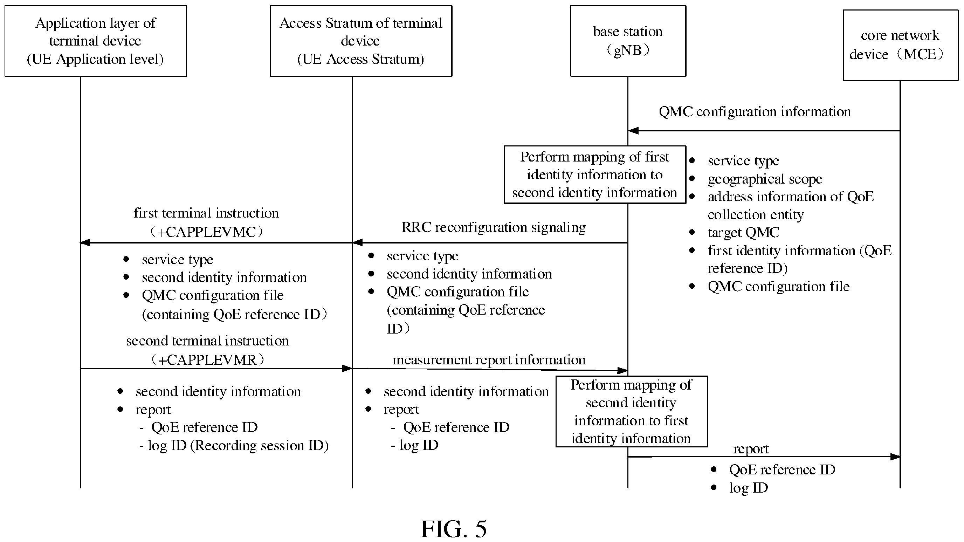

FIG. 5 shows a flowchart of a specific application example of the measurement information collection method of the present disclosure. As shown in FIG. 5, the method may include the following steps:
1. After a base station (gNB) receives QMC configuration information (activateAreaQMCjob signaling) from a core network device (MCE), the gNB needs to perform mapping of first identity information (QoE reference ID) to second identity information (RRC level ID). The data length of the second identity information is smaller than the data length of the first identity information, so the second identity informaiton can also be called Shorten ID.
2. The gNB sends measurement configuration information to the UE AS layer through RRC reconfiguration information (RRCConnectionReconfiguration signaling). The measurement configuration information includes the second identity information (RRC level ID), a service type and a QMC configuration file. The +CAPPLEVMC sent by the UE AS layer to the APP layer contains the same information.
3. The APP layer sends +CAPPLEVMR including the second identity information and a QoE measurement report to the UE AS layer.
4. The second identity information and the QoE measurement report are sent by the AS layer to the gNB through the measurement report information (measReportAPPlayer message). The gNB performs mapping from the second identity information to the first identity information, addresses a corresponding MCE IP address based on the first identity information, and sends the QoE measurement report to the corresponding MCE.

Meanwhile, it should be noted that the first access network device may also determine a network slice corresponding to the QoE measurement based on the first identity information, so as to perform optimization corresponding to network slice resource(s).

It can be seen that when 5G NR supports multiple simultaneous QoE collections and reports and the applications corresponding to these QoE collection activities belong to different network slices, according to the above methods, the access network device can know the MCE IP address and network slice corresponding to a QoE measurement report with small air interface overhead.

Optionally, an embodiment of the present disclosure may also support handover of access network devices. For example, in a case where the access network device of the above-mentioned terminal device is switched from the first access network device to a second access network device, the QoE measurement report can still be accurately fed back to the QoE collection entity. Specifically, the measurement information collection method further includes:
in a case of handover from the first access network device to the second access network device, sending, by the first access network device, the mapping information to the second access network device.

Exemplarily, the first access network device is a source base station (Source gNB), and the second access network device is a target base station (Target gNB). In order for the target base station to know the slice and MCE address of the QoE measurement report, during the handover procedure, the source base station needs to send the mapping information between the first identity information and the second identity information (such as a mapping table, a mapping rule, or a mapping formula or the like) to the target base station. In this way, after the handover is completed, the target base station can know the slice and the MCE IP address to which the received QoE measurement report belongs according to the received second identity information.

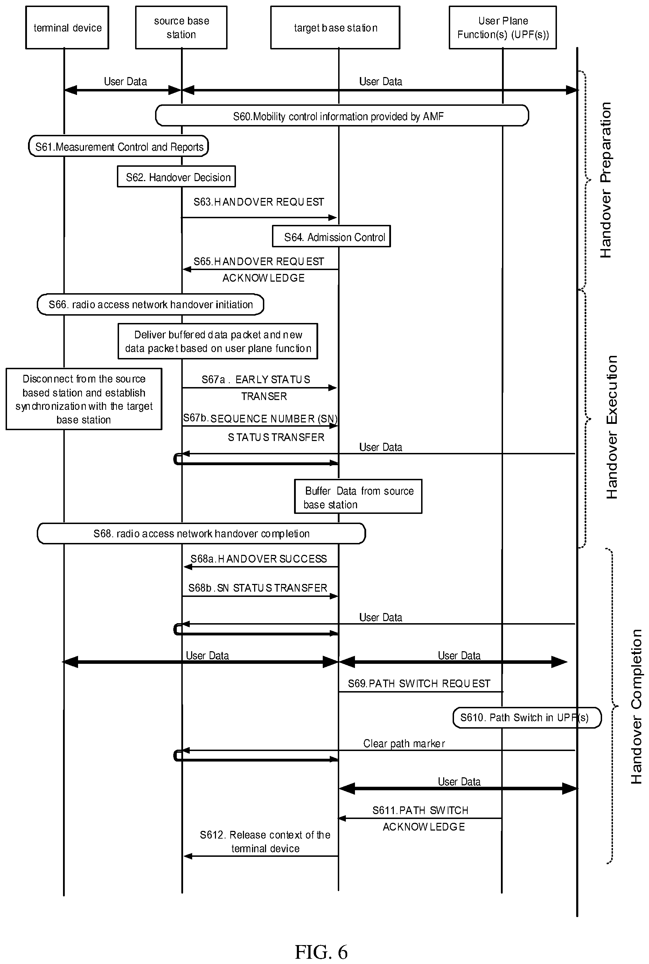

FIG. 6 shows a schematic flowchart of radio access network handover. As shown in FIG. 6, the handover procedure includes three stages: handover preparation, handover execution, and handover completion.

The handover preparation phase may include:
In S60, the Access and Mobility Management Function (AMF) provides mobility control information.
In S61, the source base station triggers the terminal device to perform measurement, and the terminal device reports a measurement report.
In S62, the source base station evaluates the measurement report reported by the terminal device, and decides whether to trigger handover.
In S63, if the source base station decides to trigger handover, it sends a handover request to the target base station.
In S64, after receiving the handover request sent by the source base station, the target base station may start admission according to service information carried by the source base station.
In S65, the target base station sends a handover request acknowledge message to the source base station.

Handover execution phases may include:
In S66, the source base station starts radio access network handover after receiving the handover request acknowledge message from the target base station. The source base station may transmit buffered data and new data packets based on a user plane function; the target base station may buffer the data received from the source base station; the terminal device may disconnect from the source base station and establish synchronization with the target base station. In addition, in S67a, the source base station and the target base station complete the initial status transfer. In S67b, the source base station and the target base station complete the sequence number status transfer.
In S68, the terminal device synchronizes to the target base station. So far, the handover execution phase is completed.

The handover completion phase may include:
In S69, the target base station sends a path switch request to the AMF.
In S610, after receiving the path switch request from the target base station, the AMF performs path switch with the user plane function (UPF), and clears the path marker of the user plane of the source base station.
In S611, after the path switch is completed, the AMF may send a path switch acknowledge message to the target base station.
In S612, the target base station sends a terminal device context release message to the source base station, notifying the source base station that the handover is successful, and triggering the source base station to release the terminal device context. At this point, the handover is completed.

In an embodiment of the present disclosure, optionally, the first access network device may send mapping information between the first identity information and the second identity information in the above step S63. That is, the first access network device sending mapping information to the second access network device includes:
sending, by the first access network device, the mapping information to the second access network device during a procedure of initiating a handover request to the second access network device.

Optionally, after the handover is completed, the terminal device sends the QoE measurement report and the second identity information to the second access network device. Specifically, the measurement information collection method may further include:
in a case of handover from the first access network device to the second access network device, sending, by the terminal device, the QoE measurement report and the second identity information to the second access network device.

The above describes the specific configuration and implementations of the embodiments of the present disclosure from different perspectives through multiple embodiments. It can be seen from at least one of the above embodiments that the embodiments of the present disclosure provide a method for reducing air interface transmission overhead and supporting simultaneous executions of different QoE collection sessions for the same service type. Further, by using the method, before and after access network handover, when 5G NR supports multiple simultaneous QoE collections and reports belonging to the same service type, the source base station and the target base station can know the MCE IP address and network slice of a QoE report with relatively small air interface overhead.

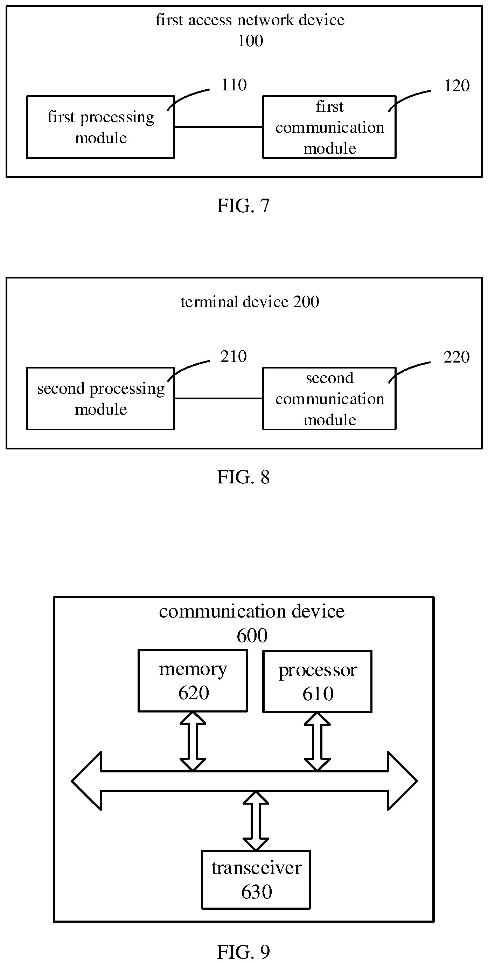

Corresponding to the processing method according to at least one embodiment, an embodiment of the present disclosure further provides a first access network device 100. Referring to FIG. 7, the first access network device includes a first processing module 110 and a first communication module 120.

The first processing module 110 is configured to determine second identity information according to first identity information in received Quality Of Experience (QoE) measurement collection configuration information.

The communication module 120 is configured to send measurement configuration information to a terminal device, wherein the measurement configuration information includes the second identity information, and the measurement configuration information is used to indicate the terminal device to obtain a QoE measurement report and send the QoE measurement report and the second identity information.

Optionally, the first processing module 110 is further configured to:
in a case where the QoE measurement report and the second identity information are received, determine the first identity information according to the second identity information; and determine address information of a core network device corresponding to the QoE measurement collection configuration information according to the first identity information;
wherein the first communication module 120 is further configured to send the QoE measurement report to the core network device based on the address information.

Optionally, a data length of the second identity information is smaller than a data length of the first identity information.

Optionally, the first identity information is a QoE reference identity.

Optionally, the first processing module 110 is configured to:
map the first identity information in the QoE measurement collection configuration information to the second identity information according to mapping information.

Optionally, the first communication module 120 is further configured to:
in a case of handover from the first access network device to a second access network device, send the mapping information to the second access network device.

Optionally, the first communication module is configured to:
send the mapping information to the second access network device during a procedure of initiating a handover request to the second access network device.

The first access network device 100 in the embodiments of the present disclosure can realize the corresponding functions of the first access network device in the aforementioned method embodiments. For the processes, functions, implementations and beneficial effects corresponding to respective modules (sub-modules, units or components and so on) in the first access network device 100, reference may be made to the corresponding descriptions in the foregoing method embodiments, and details are not repeated here. It should be noted that the functions described with respect to the various modules (sub-modules, units or components, etc.) in the first access network device 100 in the embodiments of the present disclosure may be implemented by different modules (sub-modules, units, or components, etc.), or be implemented by the same module (sub-module, unit or component, etc.). In addition, the communication module in the embodiments of the present disclosure may be implemented by a transceiver of a device, and part or all of the other module(s) may be implemented by a processor of the device.

FIG. 8 is a schematic block diagram of a terminal device 200 according to an embodiment of the present disclosure. The network device 200 may include a second processing module 210 and a second communication module 220.

The second processing module 210 is configured to, in a case where a terminal device receives measurement configuration information from a first access network device, obtaining, by the terminal device, a Quality Of Experience (QoE) measurement report, wherein the measurement configuration information includes s second identity information, and the second identity information is determined by the first access network device according to first identity information.

The second communication module 220 is configured to send the QoE measurement report and the second identity information.

Optionally, in embodiments of the present disclosure, the second communication module 220 is configured to:
send the QoE measurement report and the second identity information to the first access network device; and/or,
in a case of handover from the first access network device to a second access network device, send the QoE measurement report and the second identity information to the second access network device.

The terminal device 200 in the embodiments of the present disclosure can realize the corresponding functions of the terminal device in the aforementioned method embodiments. For the processes, functions, implementations and beneficial effects corresponding to respective modules (sub-modules, units or components and so on) in the terminal device 200, reference may be made to the corresponding descriptions in the foregoing method embodiments, and details are not repeated here. It should be noted that the functions described with respect to the various modules (sub-modules, units or components, etc.) in the terminal device 200 in the embodiments of the present disclosure may be implemented by different modules (sub-modules, units, or components, etc.), or be implemented by the same module (sub-module, unit or component, etc.). In addition, the communication module in the embodiments of the present disclosure may be implemented by a transceiver of a device, and part or all of the other module(s) may be implemented by a processor of the device.

FIG. 9 is a schematic structural diagram of a communication device 600 according to an embodiment of the present disclosure. The communication device 600 includes a processor 610, and the processor 610 may call and run a computer program from a memory to implement the methods in the embodiments of the present disclosure.

Optionally, the communication device 600 may further include a memory 620. The processor 610 may call and run a computer program from the memory 620, so as to implement the methods in the embodiments of the present disclosure.

The memory 620 may be an independent device independent of the processor 610, or may be integrated in the processor 610.

Optionally, the communication device 600 may further include a transceiver 630, and the processor 610 may control the transceiver 630 to communicate with other devices, specifically, to send information or data to other devices, or to receive information or data sent from other devices.

The transceiver 630 may include a transmitter and a receiver. The transceiver 630 may further include one or more antennas.

Optionally, the communication device 600 may be the first access network device, the terminal device, the second access network device or the core network device of the embodiments of the present disclosure, and the communication device 600 may implement the corresponding processes in the methods of the embodiments of the present disclosure. For the sake of brevity, details are not repeated here.

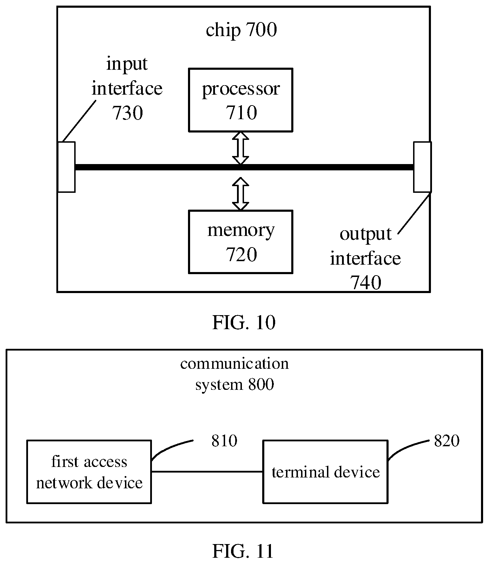

FIG. 10 is a schematic structural diagram of a chip 700 according to an embodiment of the present disclosure. The chip 700 includes a processor 710, and the processor 710 may call and run a computer program from a memory to implement the methods in the embodiments of the present disclosure.

Optionally, the chip 700 may further include a memory 720. The processor 710 may call and run a computer program from the memory 720, so as to implement the methods in the embodiments of the present disclosure.

The memory 720 may be an independent device independent of the processor 710, or may be integrated in the processor 710.

Optionally, the chip 700 may further include an input interface 730. The processor 710 may control the input interface 730 to communicate with other devices or chips. Specifically, the processor 710 may control the input interface to obtain information or data sent by other devices or chips.

Optionally, the chip 700 may further include an output interface 740. The processor 710 may control the output interface 740 to communicate with other devices or chips. Specifically, the processor 710 may control the output interface to output information or data to other devices or chips.

Optionally, the chip may be applied to the first access network device, the terminal device, the second access network device or the core network device in the embodiments of the present disclosure, and the chip may implement the corresponding processes in the methods of the embodiments of the present disclosure. For the sake of brevity, details are not repeated here.

It should be understood that the chip mentioned in the embodiments of the present disclosure may also be called a system level chip, a system chip, a chip system, or a system-on-chip.

The processor mentioned above may be a general-purpose processor, a digital signal processor (DSP), a Field Programmable Gate Array (FPGA), an Application Specific Integrated Circuit (ASIC) or other programmable logic devices, transistor logic devices, discrete hardware components, etc. The general-purpose processor mentioned above may be a microprocessor or any conventional processor or the like.

The aforementioned memory may be volatile memory or nonvolatile memory, or may include both volatile and nonvolatile memories. Among them, the non-volatile memory may be Read-Only Memory (ROM), Programmable ROM (PROM), erasable PROM (EPROM), electrically EPROM (EEPROM) or flash memory. The volatile memory may be Random Access Memory (RAM).

It should be understood that the above-mentioned memory is illustrative but not restrictive. For example, the memory in the embodiments of the present disclosure may also be a static RAM (SRAM), a dynamic RAM (DRAM), synchronous DRAM (SDRAM), double data rate SDRAM (DDR SDRAM), enhanced synchronous dynamic random access memory (enhanced SDRAM, ESDRAM), synch link DRAM (SLDRAM) or Direct Rambus RAM (DR RAM), etc. That is, the memory in the embodiments of the present disclosure is intended to include, but not be limited to, these or any other suitable types of memory.

FIG. 11 is a schematic block diagram of a communication system 800 according to an embodiment of the present disclosure. The communication system 800 includes a first access network device 810 and a terminal device 820.

The first access network device determines the second identity information according to the first identity information in the received QoE measurement collection configuration information.

The first access network device sends measurement configuration information to the terminal device, wherein the measurement configuration information includes the second identity information, and the measurement configuration information is used to indicate the terminal device to obtain a QoE measurement report.

The terminal device obtains the QoE measurement report when receiving the measurement configuration information from the first access network device.

The terminal device sends the QoE measurement report and the second identity information.

When receiving the QoE measurement report and the second identity information, the first access network device determines the first identity information according to the second identity information;
the first access network device determines address information of a core network device corresponding to the QoE measurement collection configuration information according to the first identity information, and sends the QoE measurement report to the core network device based on the address information.

The first access network device 810 may be used to realize the corresponding functions realized by the first access network device in the methods of the various embodiments of the present disclosure, and the terminal device 820 may be used to realize the corresponding functions realized by the network device in the methods of the various embodiments of the present disclosure. For the sake of brevity, details are not repeated here.

The above embodiments may be all or part implemented by software, hardware, firmware or any combination thereof. When implemented using software, embodiments may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer can be a general-purpose computer, a special-purpose computer, a computer network, or other programmable device. The computer instructions may be stored in a computer-readable storage medium, or may be transmitted from one computer-readable storage medium to another computer-readable storage medium. For example, the computer instructions may be transmitted from a website site, a computer, a server or a data center to another website site, another computer, another server or another data center in a wired manner (e.g., coaxial cable, optical fiber, Digital Subscriber Line (DSL)) or a wireless manner (e.g., infrared, wireless, microwave, etc.). The computer-readable storage medium may be any available medium that can be accessed by a computer, or a data storage device such as a server or a data center integrated with one or more available mediums. The available medium may be a magnetic medium (for example, a floppy disk, a hard disk, or a magnetic tape), an optical medium (for example, DVD), or a semiconductor medium (for example, a Solid State Disk (SSD)), and the like.

It should be understood that, in various embodiments of the present disclosure, the sequence numbers of the above-mentioned processes do not mean the order of execution, and the execution order of the processes should be determined by their functions and internal logic, and the sequence numbers should not be considered as constituting any limitation on the implementations of the embodiments of the present disclosure.

Those skilled in the art can clearly understand that for the convenience and brevity of the description, for the specific working procedure of the above-described systems, devices and units, reference can be made to the corresponding processes in the foregoing method embodiments, which will not be repeated here.

The above is only the example implementations of the present disclosure, but the scope of protection of the present disclosure is not limited thereto. Anyone familiar with the technical field can easily think of changes or substitutions within the technical scope disclosed in the present disclosure, and such changes or substitutions fall within the scope of protection of the present disclosure. Therefore, the protection scope of the present disclosure should be based on the protection scope of the claims.

## Claims

1. A measurement information collection method, comprising:
determining, by a first access network device, second identity information according to first identity information in received Quality Of Experience (QoE) measurement collection configuration information; and
sending, by the first access network device, measurement configuration information to a terminal device, wherein the measurement configuration information comprises the second identity information, and the measurement configuration information is used to indicate the terminal device to obtain a QoE measurement report and send the QoE measurement report and the second identity information.

2. The method according to claim 1, further comprising:
in a case where the QoE measurement report and the second identity information are received, determining, by the first access network device, the first identity information according to the second identity information; and
determining, by the first access network device, address information of a core network device corresponding to the QoE measurement collection configuration information according to the first identity information, and sending the QoE measurement report to the core network device based on the address information.

3. The method according to claim 1 or 2, wherein a data length of the second identity information is smaller than a data length of the first identity information.

4. The method according to any one of claims 1-3, wherein the first identity information is a QoE reference identity.

5. The method according to any one of claims 1-4, wherein determining, by the first access network device, the second identity information according to the first identity information in received QoE measurement collection configuration information comprises:
mapping, by the first access network device, the first identity information in the QoE measurement collection configuration information to the second identity information according to mapping information.

6. The method according to claim 5, further comprising:
in a case of handover from the first access network device to a second access network device, sending, by the first access network device, the mapping information to the second access network device.

7. The method according to claim 6, wherein sending, by the first access network device, the mapping information to the second access network device comprises:
sending, by the first access network device, the mapping information to the second access network device during a procedure of initiating a handover request to the second access network device.

8. A measurement information collection method, comprising:
in a case where a terminal device receives measurement configuration information from a first access network device, obtaining, by the terminal device, a Quality Of Experience (QoE) measurement report, wherein the measurement configuration information comprises second identity information, and the second identity information is determined by the first access network device according to first identity information; and
sending, by the terminal device, the QoE measurement report and the second identity information.

9. The method according to claim 8, wherein sending, by the terminal device, the QoE measurement report and the second identity information comprises:
sending, by the terminal device, the QoE measurement report and the second identity information to the first access network device; and/or,
in a case of handover from the first access network device to a second access network device, sending, by the terminal device, the QoE measurement report and the second identity information to the second access network device.

10. A first access network device, comprising:
a first processing module configured to determine second identity information according to first identity information in received Quality Of Experience (QoE) measurement collection configuration information; and
a communication module configured to send measurement configuration information to a terminal device, wherein the measurement configuration information comprises the second identity information, and the measurement configuration information is used to indicate the terminal device to obtain a QoE measurement report and send the QoE measurement report and the second identity information.

11. The first access network device according to claim 10, wherein the first processing module is further configured to:
in a case where the QoE measurement report and the second identity information are received, determine the first identity information according to the second identity information; and determine address information of a core network device corresponding to the QoE measurement collection configuration information according to the first identity information;
wherein the first communication module is further configured to send the QoE measurement report to the core network device based on the address information.

12. The first access network device according to claim 10 or 11, wherein a data length of the second identity information is smaller than a data length of the first identity information.

13. The first access network device according to any one of claims 10-12, wherein the first identity information is a QoE reference identity.

14. The first access network device according to any one of claims 10-13, wherein the first processing module is configured to:
map the first identity information in the QoE measurement collection configuration information to the second identity information according to mapping information.

15. The first access network device according to claim 14, wherein the first communication module is further configured to:
in a case of handover from the first access network device to a second access network device, send the mapping information to the second access network device.

16. The first access network device according to claim 15, wherein the first communication module is configured to:
send the mapping information to the second access network device during a procedure of initiating a handover request to the second access network device.

17. A terminal device, comprising:
a second processing module configured to, in a case where a terminal device receives measurement configuration information from a first access network device, obtaining, by the terminal device, a Quality Of Experience (QoE) measurement report, wherein the measurement configuration information comprises second identity information, and the second identity information is determined by the first access network device according to first identity information; and
a second communication module configured to send the QoE measurement report and the second identity information.

18. The terminal device according to claim 17, wherein the second communication module is configured to:
send the QoE measurement report and the second identity information to the first access network device; and/or,
in a case of handover from the first access network device to a second access network device, send the QoE measurement report and the second identity information to the second access network device.

19. A first access network device, comprising a processor and a memory, wherein the memory is used to store a computer program, and the processor calls and runs the computer program stored in the memory to implement steps of the method according to any one of claims 1 to 7.

20. A terminal device , comprising a processor and a memory, wherein the memory is used to store a computer program, and the processor calls and runs the computer program stored in the memory to implement steps of the method according to claim 8 or 9.

21. A chip comprising:
a processor configured to call and run a computer program from a memory, to cause a device in which the chip is installed to implement steps of the method according to any one of claims 1 to 9.

22. A computer-readable storage medium for storing a computer program, wherein the computer program causes a computer to implement steps of the method according to any one of claims 1 to 9.

23. A computer program product comprising computer program instructions, wherein the computer program instructions cause a computer to perform steps of the method according to any one of claims 1 to 9.

24. A computer program which causes a computer to implement steps of the method according to any one of claims 1 to 9.
